# EUROPEAN PATENT APPLICATION

(11) **EP 3 091 387 A1**
(43) Date of publication of application: **09.11.2016**
(21) Application number: 16156843.1
(22) Date of filing: 23.02.2016
(51) Int. Cl.: G02B 27/01

(54) **AUTOFOCUS HEAD MOUNTED DISPLAY DEVICE**

(30) Priority: 07.05.2015 TW 104114630
(71) Applicant: Shinyoptics Corp., Tainan City 710 (TW); Shinwa Technology Limited, Tortola (VG)
(72) Inventor: Chen, Yen-Chen, 710 Tainan City (TW); Yoo, Jinn-Chou, 710 Tainan City (TW); Chen, Chun-Min, 710 Tainan City (TW); Liao, Cheng-Shun, 710 Tainan City (TW); Chen, Sung-Nan, 710 Tainan City (TW)
(74) Representative: Michalski Hüttermann & Partner Patentanwälte mbB

(57) **Abstract**

Autofocus head mounted display device, including an imager (10) and an eyeball tracker (11). The imager includes a display element (12, 32, 52), an optical element (13, 35, 55) and a controller (14, 38, 58). An image light is projected to one of the eyeballs (15a, 15b, 37, 47, 57) of the user by the display element. The convergence or divergence of the image light is adjusted by the optical element through the controller. The image is presented at an imaging position in front of the eyeballs of the user. The eyeball tracker is disposed at the position in front of the user's eyes. Both left eye and right eye rotational angles are detected simultaneously, so as to determine a focus position of the user's eyes. The eyeball tracker is connected to the controller. The optical element is adjusted by comparing the imaging position and the focus position, and the imaging position of the image is moved to the focus position. First and second polarizing beam splitters (31, 51; 33, 53) and a 1/4 wavelength plate (34, 54) may be disposed on the path of the image light.

## Description

### CROSS-REFERENCE TO RELATED APPLICATION

This application claims the benefit of Taiwan Patent Application No. 104114630, filed on May 7, 2015, in the Taiwan Intellectual Property Office, the disclosure of which is incorporated herein in its entirety by reference.

### BACKGROUND OF THE INVENTION

### 1. Field of the Invention

The present disclosure generally relates to an autofocus head mounted display device, in particular to an autofocus head mounted display device designed with an eyeball tracker which is capable of automatically adjusting the imaging position by detecting the focus position of the eyeballs.

### 2. Description of the Related Art

Recently, the head mounted display device has been developing. The head mounted display device cooperates with the helmet or glasses wore on the user to project the displayed image to the display screen disposed on the head mounted display device to form the visible image. As the images are close to the user, those images have an enlarged visional effect through a smaller display area, such that the user is able to see the images by means of the head mounted display device.

Furthermore, by means of the optical elements, the head mounted display device forms virtual image in front of the user's eyes. No matter these images are virtual reality which is created in surrounding image or augmented reality which is added to the existing image, they all belong to the goal which the head mounted display device aims to. However, the conventional head mounted display device is disposed with a fixed focus when forming virtual image, meaning that the virtual image is displayed to the user with a fixed distance. Such design enables the user to see the virtual image at a fixed focus, but it causes the eye fatigue to the user as focusing at the same positon for a long time. If the scene displayed on the head mounted display device is added to the augmented reality which is added to the existing image and the distance between the position of the real image and the position of the virtual image is too large, it still takes time to focus and also causes the eye fatigue to the user. Hence, the practical usage of the conventional head mounted display device indeed has the shortcomings.

As a result, the inventor of the present disclosure has been mulling it over and then designs an autofocus head mounted display device which aims to improve the existing technique, so as to promote the industrial practicability.

### SUMMARY OF THE INVENTION

In view of the aforementioned technical problems, the objective of the present disclosure provides an autofocus head mounted display device which aims to resolve the prior art concerning that when the known head mounted display device is displaying images, the images are only presented with a fixed distance.

According to one objective of the present disclosure objective, the present disclosure provides an autofocus head mounted display device which may include a first imager and an eyeball tracker. The first imager may produce an image to be examined by a user and may include a first display element, a first optical element and a first controller. The first display element may project an image light of the image to one of eyeballs of the user. The first optical element may be disposed on a path where the image light is projected to and may adjust convergence or divergence of the image light, such that the image is presented at an imaging position in front of the eyeballs of the user. The first controller may be connected to the first optical element and may control a focus of the first optical element so as to adjust the imaging position. The eyeball tracker may be disposed at a position opposing to eyes of the user and detects a left eye rotational angle and a right eye rotational angle simultaneously and then may combine the left eye rotational angle with the right eye rotational angle, so as to determine a focus position of the eyes of the user. The eyeball tracker may be connected to the first controller and may adjust the first optical element by comparing the focus position with the imaging position, such that the imaging position of the image is moved to the focus position.

Preferably, the eyeball tracker may include a first eyeball tracker and a second eyeball tracker, and the first eyeball tracker and the second eyeball tracker may be correspondingly disposed to a left eye and right eye of the user and may detect the left eye rotational angle and the right eye rotational angle respectively and then may combine the left eye rotational angle with right eye rotational angle, so as to determine the focus position.

Preferably, the first optical element may include a liquid crystal lens, a positive lens, a negative lens or a combination thereof.

Preferably, the autofocus head mounted display device may further include a second imager, and the second imager includes a second display element, a second optical element and a second controller. The second display element may project the image light to another eyeball of the user. The second optical element may be disposed on a path where the image light is projected to and may adjust convergence or divergence of the image light, such that the image is presented at the imaging position. The second controller may be connected to the second optical element and may control a focus of the second optical element, so as to adjust the imaging position. The eyeball tracker may be also connected to the second controller, and the first controller and the second controller may adjust the first optical element and the second optical element respectively according to a comparison result of the imaging position and the focus position, such that the imaging position is moved to the focus position.

Preferably, the eyeball tracker may include a first eyeball tracker and a second eyeball tracker, and the first eyeball tracker and the second eyeball tracker may be disposed to the eyes of the user correspondingly and may detect the left eye rotational angle and the right eye rotational angle respectively and then may combine the left eye rotational angle with right eye rotational angle, so as to determine the focus position.

Preferably, the second optical element may include a liquid crystal lens, a positive lens, a negative lens or a combination thereof.

According to another objective of the present disclosure, an autofocus head mounted display device is provided, which may include a first light source, a first polarizing beam splitter, a first display element, a second polarizing beam splitter, a first 1/4 wavelength plate (1/4λ plate), a first optical element and an eyeball tracker. The first light source may provide a light. The first polarizing beam splitter may be disposed on a path where the light is transmitted and may reflect the light. The first display element may be disposed to receive the light reflected from the first polarizing beam splitter and may project an image light to penetrate the first polarizing beam splitter. The second polarizing beam splitter may be disposed on a path where the image light is transmitted to enable the image light to penetrate the second polarizing beam splitter. The first 1/4 wavelength plate may be disposed on the path where the image light is transmitted to enable the image light to penetrate the first 1/4 wavelength plate. After the image light is reflected from a first reflecting mirror, the image light is back to the second polarizing beam splitter along the path where the image light is transmitted, and after a polarizing polarity of the image light is changed by the first 1/4 wavelength plate, the image light is reflected to one of eyeballs of a user by the second polarizing beam splitter. The first optical element may be disposed between the first polarizing beam splitter and the second polarizing beam splitter, and convergence or divergence of the image light may be adjusted by the first optical element, such that the image is presented at an imaging position in front of the eyeballs of the user. The eyeball tracker may be disposed at a position opposing to eyes of the user and may detect a left eye rotational angle and a right eye rotational angle simultaneously and then may combine the left eye rotational angle with the right eye rotational angle, so as to determine a focus position of the eyes of the user. The eyeball tracker may be connected to the first controller and may adjust the first optical element by comparing the focus position with the imaging position, such that the imaging position of the image is moved to the focus position.

Preferably, the eyeball tracker may include a first eyeball tracker and a second eyeball tracker, and the first eyeball tracker and the second eyeball tracker may be correspondingly disposed to a left eye and right eye of the user and may detect the left eye rotational angle and the right eye rotational angle respectively and then may combine the left eye rotational angle with right eye rotational angle, so as to determine the focus position.

Preferably, the autofocus head mounted display device may further include a first camera disposed to the first polarizing beam splitter correspondingly and electrically connected to the first display element, and the first camera may receive a scene light reflected from the second polarizing beam splitter and the first polarizing beam splitter and then may transform the received scene light into the image light projected by the first display element.

Preferably, the first camera may include a charge coupled device.

Preferably, the autofocus head mounted display device may further include a second light source, a third polarizing beam splitter, a second display element, a fourth polarizing beam splitter, a second 1/4 wavelength plate (1/4λ plate) and a second optical element. The second light source may provide a light. The third polarizing beam splitter may be disposed on a path where the light is transmitted and may reflect the light. The second display element may be disposed to receive the light reflected from the third polarizing beam splitter and may project the image light to penetrate the third polarizing beam splitter. The fourth polarizing beam splitter may be disposed on a path where the image light is transmitted to enable the image light to penetrate the fourth polarizing beam splitter. The second 1/4 wavelength plate may be disposed on the path where the image light is transmitted to enable the image light to penetrate the second 1/4 wavelength plate. After the image light is reflected from a second reflecting mirror, the image light is back to the fourth polarizing beam splitter along the path where the image light is transmitted, and after a polarizing polarity of the image light is changed by the second 1/4 wavelength plate. The image light may be reflected to another eyeball of the user by the fourth polarizing beam splitter. The second optical element may be disposed between the third polarizing beam splitter and the fourth polarizing beam splitter, and convergence or divergence of the image light may be adjusted by the second optical element, such that the image is presented at the imaging position. The eyeball tracker may be also connected to the second controller, and the first controller and the second controller may adjust the first optical element and the second optical element respectively according to a comparison result of the imaging position and the focus position, such that the imaging position is moved to the focus position.

Preferably, the eyeball tracker may include a first eyeball tracker and a second eyeball tracker, and the first eyeball tracker and the second eyeball tracker may be correspondingly disposed to a left eye and right eye of the user and may detect the left eye rotational angle and the right eye rotational angle respectively and then may combine the left eye rotational angle with right eye rotational angle, so as to determine the focus position.

Preferably, the autofocus head mounted display device may further include a second camera disposed to the third polarizing beam splitter correspondingly and electrically connected to the second display element, and the second camera may receive a scene light reflected from the fourth polarizing beam splitter and the third polarizing beam splitter and then t may transform the received scene light into the image light projected by the second display element.

Preferably, the second camera may include a charge coupled device.

As mentioned previously, an autofocus head mounted display device of the present disclosure may have one or more advantages as follows.

1. The autofocus head mounted display device of the present disclosure is capable of forming virtual image on the head mounted display device by means of the imager to provide the user with image effects such as virtual reality or augmented reality, so as to increase the diversity of the head mounted display device.

2. The autofocus head mounted display device of the present disclosure is capable of detecting both left eye rational angle and right eye rational angle simultaneously by an eyeball tracker to determine the focus position of the eyes, so as to automatically adjust the optical element of the head mounted display device according to the focus position to enable the imaging position being moved to the focus position. As a result, it can avoid the eye fatigue to the user as focusing on the same position for a long time while promote the comfort to the user.

3. The autofocus head mounted display device of the present disclosure is capable of adjusting the optical elements thereof respectively according to different positions of the eyes, so as to popularize the device to be applied to different users.

### BRIEF DESCRIPTION OF THE DRAWINGS

FIG. 1 is a schematic diagram of an autofocus head mounted display device of the present disclosure.
FIG. 2 is a schematic diagram of another autofocus head mounted display device of the present disclosure.
FIG. 3 is a schematic diagram of yet another autofocus head mounted display device of the present disclosure.
FIG. 4 is a schematic diagram of one more autofocus head mounted display device of the present disclosure.

### DETAILED DESCRIPTION OF THE PREFERRED EMBODIMENTS

Hereinafter, embodiments of the present disclosure will be described in detail with reference to the accompanying drawings so that those skilled in the art to which the present disclosure pertains can realize the present disclosure. As those skilled in the art would realize, the described embodiments may be modified in various different ways, all without departing from the spirit or scope of the present disclosure.

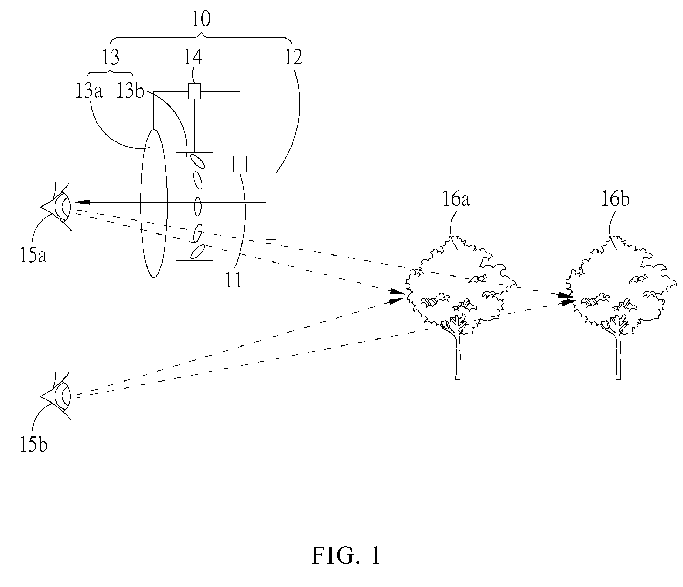

Please refer to FIG. 1 which is a schematic diagram of an autofocus head mounted display device of the present disclosure. As shown in the figure, the autofocus head mounted display device includes a first imager 10 and an eyeball tracker 11. The first imager 10 includes a first display element 12, a first optical element 13 and a first controller 14. The first imager 10 is disposed on the head mounted display device, such as on the lens of the glasses or that of the helmet. The head mounted display device is opposite to eyeballs 15a, 15b of user's eyes. The first imager 10, which provides the user with the desired image, is designed opposing to an eyeball 15a of the user, and the eyeball may be left eye or right eye of the user. The manner which the first imager 10 displays images is that the light of the image is projected by the first display element 12 (such as a projector or a display panel) to pass through the first optical element 13 to arrive at the user's eyeball 15a, such that the image is displayed at an image position 16a in front of the user. Here, the first optical element 13 includes a conventional lens 13a and a liquid crystal lens 13b which are respectively connected to a first controller 14. The conventional lens 13a may be a combination of a positive lens and a negative lens and the focus position is changed by shifting the conventional lens 13a, which is controlled by the first controller 14. The liquid crystal lens 13b adjusts the image light which penetrates the lens by a manner of modulation. Similarly, the first controller 14 controls convergence or divergence of the light, so as to change the imaging position 16a of the image light. Here, the first optical element 13, which changes the imaging position 16, may be one of the aforementioned lens or a combination thereof. Compared with the conventional head mounted display device of which the position of the optical lens is fixed and the imaging position 16a is unable to be changed, resulting that the eye fatigue to the user as focusing on the same position for a long time, the autofocus head mounted display device of the present disclosure has the advantage of improving such shortcomings.

The first optical element 13 controls the imaging position 16a by means of the eyeball tracker 11. The eyeball tracker 11, which may be an image capture device or a light sensing device, is disposed to the user's eyeballs 15a, 15b directly. For example, the eyeball tracker 11 may be disposed between the first display element 12 and the first optical element 13. The eyeball tracker 11 tracks the eyeballs 15a, 15b at the same time, and detects a left eye rotational angle and a right eye rotational angle of the user, and a focus position 16b of the user's eyes is determined by the rotational angles of the two eyes. The eyeball tracker 11 is connected to the first controller 14 and transmits the detected focus position 16b to the first controller 14 to compare the original imaging position 16a with the focus position 16b, and the first controller 14 adjusts the focus of the first optical element 13. For example, adjusting front and rear positons of the conventional lens 13a or adjusting the arrangement of the liquid-crystal molecule inside the liquid crystal lens 13b is able to move the original imaging position 16 of the image to the focus position 16b. Because the imaging position is not stationary when the head mounted display device is imaging, the user is therefore able to easy obtain the desired image when the focus position is changed as the eyes rotation. As a result, the use's eyes needn't to focus usually.

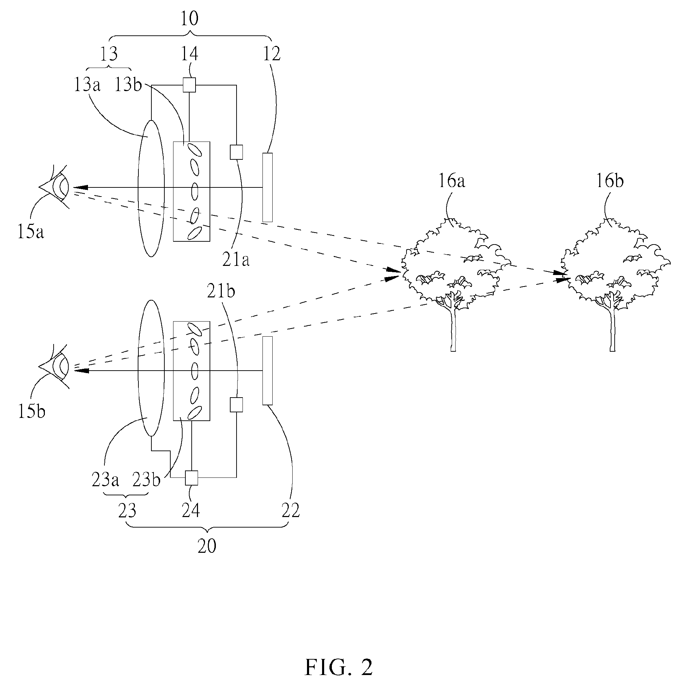

Please refer to FIG. 2 which is a schematic diagram of another autofocus head mounted display device of the present disclosure. The parts of FIG. 2, which are the same as that shown in FIG. 1, are not repeated herein. The different between FIG. 1 and FIG. 2 is described as follows. With respect to the first imager 10 and the first eyeball tracker 21a, the autofocus head mounted display device of the present disclosure can be disposed with a second imager 20 and a second eyeball tracker 21b. The second imager 20 includes a second display element 22, a second optical element 23 and a second controller 24. The first imager 10 and the second imager 20 are disposed to face the user's eyeballs 15a, 15b directly. The second display element 22 projects the image light, and the image light passes through the second optical element 23 and then arrives at the user's eyeball 15b, so that the image is displayed at the imaging position 16a in front of the user. The second optical element 23 includes a conventional lens 23a and a liquid crystal lens 23b which are respectively connected to the second controller 24.The second controller 24 adjusts the second optical element 23 to change the imaging position 16a of the image. Here, the first optical element 13 and the second optical element 23 are respectively controlled by the first controller 14 and the second controller 24, and the imaging position 16a is determined by the modulation of the two controllers. Because the imaging devices are disposed to the user's eyeballs applied in the embodiment, the same image can be achieved by the three-dimensional image effect produced by different imaging distances, and the first optical element 13 and the second optical element 23 can be controlled by the first controller 14 and the second controller 24 respectively, so as to control different imaging distances.

The first controller 14 and the second controller 24 are both controlled according to the detection of the eyeball tracker. Here, the eyeball tracker includes the first eyeball tracker 21a and the second eyeball tracker 21b, but the present disclosure shall be not limited thereto. In another embodiment of the present disclosure, only one eyeball tracker can be applied to detect the focus positons of the eyes. In this embodiment, the first eyeball tracker 21a detects the rotational angle of the eyeball 15a and the second eyeball tracker 21b detects the rotational angle of the eyeball 15b. The rotational angles of the eyeball 15a and eyeball 15b are combined to determine the focus positon 16b. Afterwards, the first eyeball tracker 21a and the second eyeball tracker 21b are respectively connected to the first controller 14 and the second controller 24 to adjust the optical elements. As the vision of the user's eyes may be different, the problem of myopia and hyperopia has to be considered when the user's eyes are adjusting the focus positons respectively. Hence, such problem has to be compensated to facilitate the image to be displayed more clearly. Besides, the autofocus head mounted display device of the present disclosure may be disposed with additional sensing device, such as an infrared ray detector or a gyroscopic sensor, to connect to the first controller 14 or the second controller 24. By means of sensing the usage status, such as a distance between the user and the external scene or an angle between the user and the ground to further control the first optical element 13 and the second optical element 23, it facilitates the imaging position 16a of the image to cooperate with the usage status to display the optimal image.

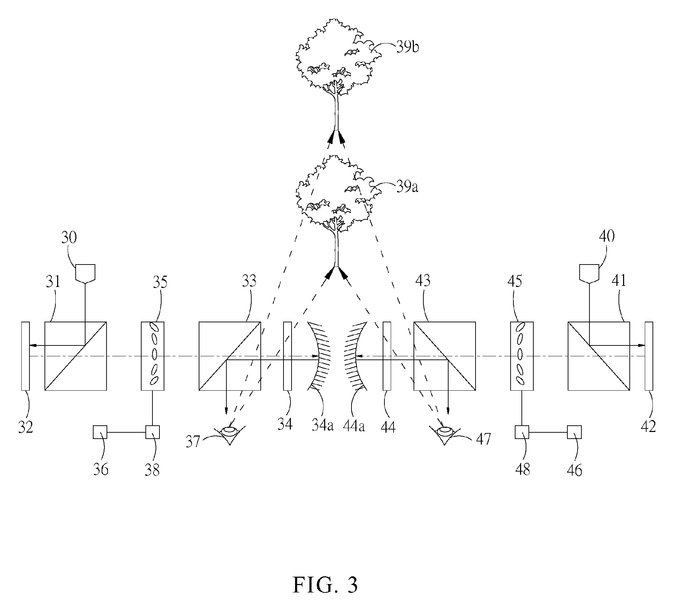

Please refer to FIG. 3 which is a schematic diagram of yet another autofocus head mounted display device of the present disclosure. As shown in the figure, the autofocus head mounted display device includes a first light source 30, a first polarizing beam splitter 31, a first display element 32, a second polarizing beam splitter 33, a first 1/4 wavelength plate 34, a first optical element 35 and an eyeball tracker 36. The first light source 30 may be a light-emitting diode (LED) for providing light to be reflected to the first display element 32 through the first polarizing beam splitter 31. After the first display element 32 receives the light reflected from the first polarizing beam splitter 31, the image light is projected to penetrate the first polarizing beam splitter 31. The first polarizing beam splitter 31 is characterized of partial reflection and partial penetration, such as reflecting s-polarized light to enable p-polarized light transmitting. The second polarizing beam splitter 33 is disposed on a path where the image light is transmitted, and the first polarizing beam splitter 31 and the second polarizing beam splitter 33 are both characterized of partial reflection and partial penetration. The image light can penetrate the first polarizing beam splitter 31 and can penetrate the second polarizing beam splitter 33 too. After the image light passes through the first 1/4 wavelength plate 34, a first reflecting mirror 34a is applied to reflect the image light, and the image light is back to the second polarizing beam splitter 33 along the path where the image light is transmitted. The first 1/4 wavelength plate 34 is able to change the polarizing polarity of light, and the first reflecting mirror 34a reflects light by the conventional concave surface. As the polarizing polarity of the image light is changed by the first 1/4 wavelength plate 34, the image light is reflected to one eyeball 37 of eyeballs of the user.

On the path where the image light is transmitted, the first optical element 35 is disposed between the first polarizing beam splitter 31 and the second polarizing beam splitter 33. The first optical element may be a liquid crystal lens, and controlling the first controller 38 to adjust the first optical element 35 is able to converge or diverge the image light to be displayed at the imaging position 39a in front of the user. The first eyeball tracker 36 is disposed at a position opposing to the eye 37 of the user and detects the rotational angle of the eyeball to evaluate the focus position 39b of the user's eyes. Besides, adjusting the first optical element 35 by comparing the focus position 39b with the imaging position 39a is able to move the image from the imaging position 39a to the focus position 39b.

Similarly, another eye of the user is also disposed with a second light source 40, a third polarizing beam splitter 41, a second display element 42, a fourth polarizing beam splitter 43, a second 1/4 wavelength plate 44, a second optical element 45 and a second eyeball tracker 46. The operations are all the same as that mentioned above. The second light source 40 provides a light to be reflected from the third polarizing beam splitter 41 to the second display element 42, and then the image light is projected to penetrate the third polarizing beam splitter 41, the fourth polarizing beam splitter 43 and the second 1/4 wavelength plate 44. Afterwards, the image light is reflected from a second reflecting mirror 44a and then back to the fourth polarizing beam splitter 43 along the path where the light is transmitted. After the polarizing polarity of the image light is changed by the second 1/4 wavelength plate 44, the image light is reflected to another eyeball 47 of the user by the fourth polarizing beam splitter 43. The second optical element 45 is also disposed between the third polarizing beam splitter 41 and the fourth polarizing beam splitter 43 and is connected to the second controller 48. The second controller 48 adjusts the second optical element 45 to converge or diverge the image light to be displayed on the imaging position 39a. Afterwards, the second eyeball tracker 46 is also applied to detect the rotational angle of the eyeball 47 to cooperate with the rotational angle of the eyeball 37 detected by the first eyeball tracker 36 to obtain the focus position 39b of the eyes, and the focus position 39b is transmitted to the second controller 48 to control the focus of the second optical element 45.

The imaging mentioned herein is applied to adjust the imaging positon according to the distance of the focus of the eyes to enable the user to see the image easily without focusing on the fixed focus. Whether the image is displayed through virtual reality, which is used to create surrounding image, or augmented reality, which is added to the real scene, the autofocus mechanism is capable of being applied to facilitates the usage of the head mounted display device. In addition, the adjustment of the vision and the addition of the other auxiliary sensing devices are both able to be applied to the autofocus head mounted display device of the embodiment.

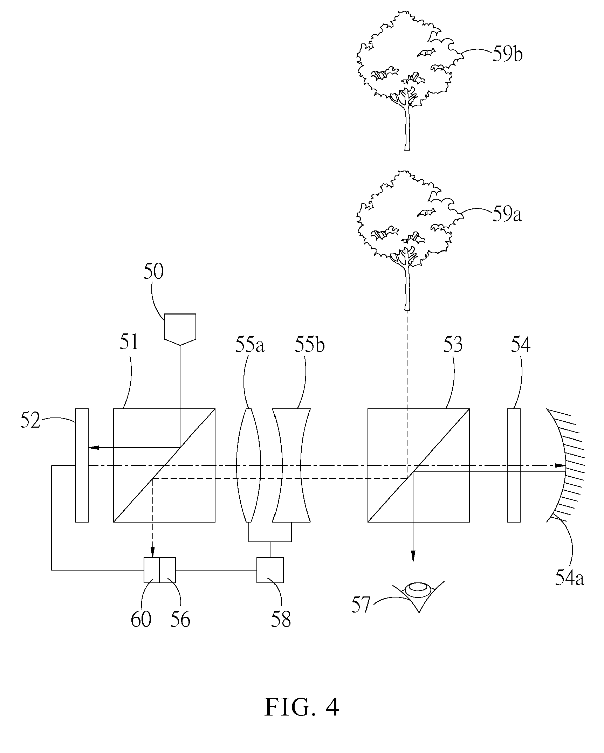

Please refer to FIG. 4 which is a schematic diagram of one more autofocus head mounted display device of the present disclosure. As shown in the figure, the autofocus head mounted display device includes a first light source 50, a first polarizing beam splitter 51, a first display element 52, a second polarizing beam splitter 53, a first 1/4 wavelength plate 54, a first optical element 55 and an eyeball tracker 56. The light is emitted from the first light source 50 and arrives at the first display element 52 through the first polarizing beam splitter 51. An image light projected by the first display element 52 sequentially penetrates the first polarizing beam splitter 51, the first optical element 55 and the second polarizing beam splitter 53. Here, the first optical element 55 includes a combination of the positive lens 55a and the negative lens 55b. After the image light penetrates the second polarizing beam splitter 53, the image light passes through the first 1/4 wavelength plate 54 and is reflected from a reflecting mirror 54a to pass through the first 1/4 wavelength plate 54 to back to the second polarizing beam splitter 53. At the moment, the polarizing polarity of the image light is changed, so it can be transmitted to the eye 57 of the user by the second polarizing beam splitter 53, and the image can be formed at the predetermined imaging position 59a. The first eyeball tracker 56 directs to the eyeballs to detect the rotational angles thereof to evaluate the focus positions 59b of the eyes, such that the first controller 58 adjusts the positions with respect to the positive lens 55a and the negative lens 55b to change the imaging positon 59a to the focus position 59b. As a result, it facilitates the user to observe the image easier when changing visional focus.

The difference between this embodiment and the foregoing embodiment is that a camera 60 is applied in this embodiment. The camera includes a charge-coupled device (CCD), and the camera and the first light source 50 are respectively disposed at two sides of the first polarizing beam splitter. The camera 60 collects the scene light reflected from the second polarizing beam splitter 53 and the first polarizing beam splitter 51 and is electrically connected to the first display element 52 to project the image of the external scene through the first display element 52. After passing through the aforementioned optical path, the image is transmitted to the user's eye 57. Hence, the autofocus head mounted display device is capable of transforming an external scene into a virtual image and displays it in the head mounted display device. Besides, the position displaying the image of the external scene and the focus positions of the user's eyes can be adjusted to be better. Comparing the information of the received scene position with the focus information detected by the first eyeball tracker 56 by the camera 60, the first controller 58 controls the first optical element 55 to further display the image at the optimal positon and adjusts the user's focus position according to the actual requirements.

The aforementioned embodiments describe the imaging device disposed on one eye of the user, but the present disclosure shall be not limited thereto. The autofocus head mounted display device may be disposed with the imaging devices having camera at the eyes to respectively control the positions of the optical elements by different controllers, so as to achieve the effect of adjusting the imaging positon.

While the means of specific embodiments in present disclosure has been described by reference drawings, numerous modifications and variations could be made thereto by those skilled in the art without departing from the scope and spirit of the disclosure set forth in the claims. The modifications and variations should in a range limited by the specification of the present disclosure.

## Claims

1. An autofocus head mounted display device, comprising:
a first imager (10) producing an image to be examined by a user, and the first imager (10) comprising:
a first display element (12, 32, 52) projecting an image light of the image to one of eyeballs (15a, 15b, 37, 47, 57) of the user;
a first optical element (13, 35, 55) disposed on a path where the image light is projected to and adjusting convergence or divergence of the image light, such that the image is presented at an imaging position in front of the eyeballs (15a, 15b, 37, 47, 57) of the user; and
a first controller (14, 38, 58) connected to the first optical element (13, 35, 55) and controlling a focus of the first optical element (13, 35, 55) so as to adjust the imaging position (16a, 39a, 59a), and
an eyeball tracker (11) disposed at a position opposing to eyes of the user and detecting a left eye rotational angle and a right eye rotational angle simultaneously and then combining the left eye rotational angle with the right eye rotational angle, so as to determine a focus position (16b, 39b, 59b) of the eyes of the user;
wherein the eyeball tracker (11) is connected to the first controller (14, 38, 58) and adjusts the first optical element (13, 35, 55) by comparing the focus position (16b, 39b, 59b) with the imaging position (16a, 39a, 59a), such that the imaging position (16a, 39a, 59a) of the image is moved to the focus position (16b, 39b, 59b).

2. The autofocus head mounted display device of clam 1, wherein the eyeball tracker (11) comprises a first eyeball tracker (21a, 36, 56) and a second eyeball tracker (21b, 46), and the first eyeball tracker (21a, 36, 56) and the second eyeball tracker (21b, 46) are correspondingly disposed to a left eye and a right eye of the user and detect the left eye rotational angle and the right eye rotational angle respectively and then combine the left eye rotational angle with right eye rotational angle, so as to determine the focus position (16b, 39b, 59b).

3. The autofocus head mounted display device of clam 1, wherein the first optical element (13, 35, 55) comprises a liquid crystal lens (13b, 23b), a positive lens (55a), a negative lens (55b) or a combination thereof.

4. The autofocus head mounted display device of clam 1, further comprising a second imager (20) comprising:
a second display element (22, 42) projecting the image light to another eyeball (15a, 15b, 37, 47, 57) of the user,
a second optical element (23, 45) disposed on a path where the image light is projected to and adjusting convergence or divergence of the image light, such that the image is presented at the imaging position (16a, 39a, 59a), and
a second controller (24, 48) connected to the second optical element (23, 45) and controlling a focus of the second optical element (23, 45), so as to adjust the imaging position (16a, 39a, 59a);
wherein the eyeball tracker (11) is also connected to the second controller (24, 48), and the first controller (14, 38, 58) and the second controller (24, 48) adjust the first optical element (13, 35, 55) and the second optical element (23, 45) respectively according to a comparison result of the imaging position (16a, 39a, 59a) and the focus position (16b, 39b, 59b), such that the imaging position (16a, 39a, 59a) is moved to the focus position (16b, 39b, 59b).

5. The autofocus head mounted display device of clam 4, wherein the eyeball tracker (11) comprises a first eyeball tracker (21a, 36, 56) and a second eyeball tracker (21b, 46), and the first eyeball tracker (21a, 36, 56) and the second eyeball tracker (21b, 46) are correspondingly disposed to a left eye and a right eye of the user and detect the left eye rotational angle and the right eye rotational angle respectively and then combine the left eye rotational angle with right eye rotational angle, so as to determine the focus position (16b, 39b, 59b).

6. The autofocus head mounted display device of clam 4, wherein the second optical element (23, 45) comprises a liquid crystal lens (13b, 23b), a positive lens (55a), a negative lens (55b) or a combination thereof.

7. An autofocus head mounted display device, comprising:
a first light source (30, 50) providing a light,
a first polarizing beam splitter (31, 51) disposed on a path where the light is transmitted and reflecting the light;
a first display element (12, 32, 52) disposed to receive the light reflected from the first polarizing beam splitter (31, 51) and projecting an image light to penetrate the first polarizing beam splitter (31, 51);
a second polarizing beam splitter (33, 53) disposed on a path where the image light is transmitted to enable the image light to penetrate the second polarizing beam splitter (33, 53);
a first 1/4 wavelength plate (34, 54) disposed on the path where the image light is transmitted to enable the image light to penetrate the first 1/4 wavelength plate (34, 54), and after the image light is reflected from a first reflecting mirror (34a, 54a), the image light is back to the second polarizing beam splitter (33, 53) along the path where the image light is transmitted, and after a polarizing polarity of the image light is changed by the first 1/4 wavelength plate (34, 54), the image light is reflected to one of eyeballs (15a, 15b, 37, 47, 57) of a user by the second polarizing beam splitter (33, 53);
a first optical element (13, 35, 55) disposed between the first polarizing beam splitter (31, 51) and the second polarizing beam splitter (33, 53), and convergence or divergence of the image light being adjusted by the first optical element, such that the image is presented at an imaging position in front of the eyeballs (15a, 15b, 37, 47, 57) of the user, and
an eyeball tracker (11) disposed at a position opposing to eyes of the user, and detecting a left eye rotational angle and a right eye rotational angle simultaneously and then combining the left eye rotational angle with the right eye rotational angle, so as to determine a focus position of the eyes of the user;
wherein the eyeball tracker is connected to the first controller (14, 38, 58) and adjusts the first optical element (13, 35, 55) by comparing the focus position (16b, 39b, 59b) with the imaging position (16a, 39a, 59a), such that the imaging position (16a, 39a, 59a) of the image is moved to the focus position (16b, 39b, 59b).

8. The autofocus head mounted display device of claim 7, wherein the eyeball tracker (11) comprises a first eyeball tracker (21a, 36, 56) and a second eyeball tracker (21b, 46), and the first eyeball tracker (21a, 36, 56) and the second eyeball tracker (21b, 46) are correspondingly disposed to a left eye and a right eye of the user and detect the left eye rotational angle and the right eye rotational angle respectively and then combine the left eye rotational angle with right eye rotational angle, so as to determine the focus position (16b, 39b, 59b).

9. The autofocus head mounted display device of claim 7, further comprising a first camera (60) disposed to the first polarizing beam splitter (31, 51) correspondingly and electrically connected to the first display element (12, 32, 52), and the first camera (60) receiving a scene light reflected from the second polarizing beam splitter (33, 53) and the first polarizing beam splitter (31, 51) and then transforming the received scene light into the image light projected by the first display element (12, 32, 52).

10. The autofocus head mounted display device of claim 9, wherein the first camera comprises a charge coupled device.

11. The autofocus head mounted display device of claim 7, further comprising
a second light source (40) providing a light,
a third polarizing beam splitter (41) disposed on a path where the light is transmitted and reflecting the light;
a second display element (22, 42) disposed to receive the light reflected from the third polarizing beam splitter (41) and projecting the image light to penetrate the third polarizing beam splitter (41);
a fourth polarizing beam splitter (43) disposed on a path where the image light is transmitted to enable the image light to penetrate the fourth polarizing beam splitter (43);
a second 1/4 wavelength plate (44) disposed on the path where the image light is transmitted to enable the image light to penetrate the second 1/4 wavelength plate (44), and after the image light is reflected from a second reflecting mirror (44a), the image light is back to the fourth polarizing beam splitter (43) along the path where the image light is transmitted, and after a polarizing polarity of the image light is changed by the second 1/4 wavelength plate (44), the image light is reflected to another eyeball (15a, 15b, 37, 47, 57) of the user by the fourth polarizing beam splitter, and
a second optical element (23, 45) disposed between the third polarizing beam splitter (41) and the fourth polarizing beam splitter (43), and convergence or divergence of the image light being adjusted by the second optical element (23, 45), such that the image is presented at the imaging position (16a, 39a, 59a);
wherein the eyeball tracker is also connected to the second controller (24, 48), and the first controller (14, 38, 58) and the second controller (24, 48) adjust the first optical element (13, 35, 55) and the second optical element (23, 45) respectively according to a comparison result of the imaging position (16a, 39a, 59a) and the focus position (16b, 39b, 59b), such that the imaging position (16a, 39a, 59a) is moved to the focus position (16b, 39b, 59b).

12. The autofocus head mounted display device of claim 11, wherein the eyeball tracker (11) comprises a first eyeball tracker (21a, 36, 56) and a second eyeball tracker (21b, 46), and the first eyeball tracker (21a, 36, 56) and the second eyeball tracker (21b, 46) are correspondingly disposed to a left eye and a right eye of the user and detect the left eye rotational angle and the right eye rotational angle respectively and then combine the left eye rotational angle with right eye rotational angle, so as to determine the focus position (16b, 39b, 59b).

13. The autofocus head mounted display device of claim 11, further comprising a second camera disposed to the third polarizing beam splitter (41) correspondingly and electrically connected to the second display element (22, 42), and the second camera receiving a scene light reflected from the fourth polarizing beam splitter (43) and the third polarizing beam splitter (41) and then transforming the received scene light into the image light projected by the second display element (22, 42).

14. The autofocus head mounted display device of claim 13, wherein the second camera comprises a charge coupled device.
